# FASCICULE DE BREVET EUROPEEN

(11) **EP 0 671 724 B1**
(45) Date de publication et mention de la délivrance du brevet: **26.07.2000**
(21) Numéro de dépôt: 95400463.6
(22) Date de dépôt: 03.03.1995
(51) Int. Cl.: G11B 5/21, G11B 5/31

(54) **Tête magnétique verticale et son procédé de réalisation**
Vertikaler Magnetkopf und Herstellungsverfahren
Vertical magnetic head and manufacturing process

(30) Priorité: 07.03.1994 FR 9402595
(43) Date de publication de la demande: 13.09.1995
(73) Titulaire: COMMISSARIAT A L'ENERGIE ATOMIQUE, 75015 Paris Cédex 15 (FR)
(72) Inventeur: Gaud, Pierre, F-38120 Saint Egreve (FR); Sibuet, Henri, F-38120 Le Fontanil (FR); Louis, Christine, F-38500 Coublevie (FR); Vallet, Nathalie, F-38000 Grenoble (FR)
(74) Mandataire: Dubois-Chabert, Guy

(56) Documents cités:
- EP-A- 0 420 755
- EP-A- 0 443 942
- WO-A-92/02015
- US-A- 4 535 376
- PATENT ABSTRACTS OF JAPAN vol. 13 no. 382 (P-923) [3730] ,24 Août 1989 & JP-A-01 133210 (HITACHI MAXELL LTD) 25 Mai 1989,
- PATENT ABSTRACTS OF JAPAN vol. 9 no. 109 (P-355) [1832] ,14 Mai 1985 & JP-A-59 231723 (MATSUSHITA DENKI SANGYO K.K.) 26 Décembre 1984,
- PATENT ABSTRACTS OF JAPAN vol. 7 no. 57 (P-181) ,9 Mars 1983 & JP-A-57 203221 (MITSUBISHI DENKI K. K.) 13 Décembre 1982,
- PATENT ABSTRACTS OF JAPAN vol. 11 no. 378 (P-645) [2825] ,10 Décembre 1987 & JP-A-62 146419 (HITACHI LTD) 30 Juin 1987,
- PATENT ABSTRACTS OF JAPAN vol. 7 no. 121 (P-199) [1266] ,25 Mai 1983 & JP-A-58 037830 (FUJITSU K. K.) 5 Mars 1983,
- PATENT ABSTRACTS OF JAPAN vol. 9 no. 170 (P-373) [1893] ,16 Juillet 1985 & JP-A-60 045920 (FUJITSU K. K.) 12 Mars 1985,

## Description

### Domaine technique

La présente invention a pour objet une tête magnétique verticale et son procédé de réalisation.

Elle trouve une application privilégiée dans l'enregistrement vidéo grand public. Mais elle peut être utilisée aussi dans d'autres domaines, comme celui des sauvegardes de données ou celui des mémoires d'ordinateur.

### Etat de la technique antérieure

Un support d'enregistrement magnétique pour matériel vidéo, sauvegarde de données ou mémoire d'ordinateur, comprend de nombreuses pistes sur lesquelles sont inscrites des informations sous forme de domaines magnétiques.

Pour augmenter la densité d'informations, on augmente non seulement le nombre d'informations par unité de longueur, mais encore le nombre de pistes. Pour cela, on diminue la largeur des pistes, et, simultanément,l'intervalle les séparant, jusqu'à les rendre jointives.

Aujourd'hui, répondant à ces objectifs, on trouve principalement sur le marché deux types de têtes, des têtes dites à "métal dans l'entrefer" (en anglais "Metal-in-Gap"), et des têtes dites "sandwich".

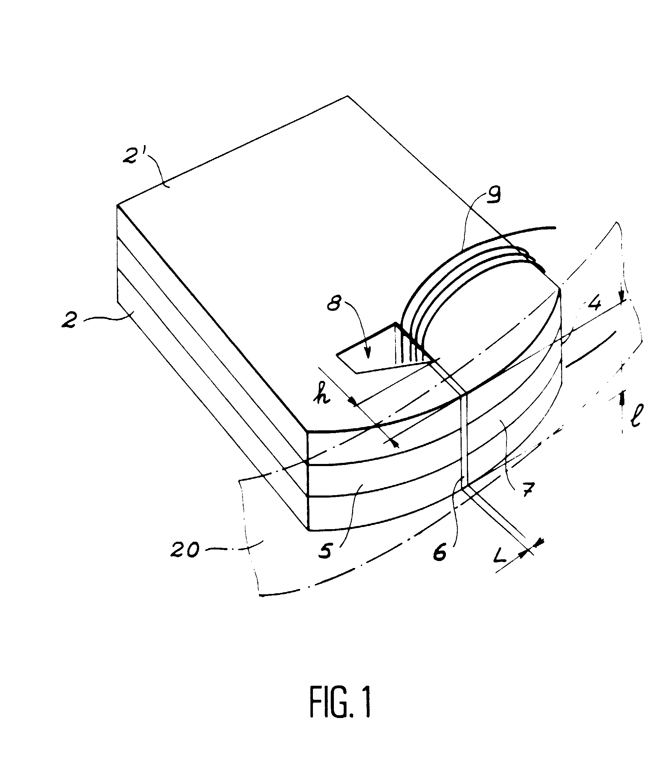

La figure 1 annexée illustre un exemple de tête de ce second type. La tête représentée comprend un substrat 2 supportant un circuit magnétique 4 constitué par une couche magnétique déposée sur la face supérieure du substrat, ce circuit présentant à l'avant deux pièces polaires 5 et 7 séparées par un entrefer 6, qui est formé par un espaceur amagnétique. Cette tête comprend en outre, au-dessus du circuit magnétique, un superstrat 2' amagnétique. Par alleurs, la tête comprend encore une ouverture 8 percée à travers la couche magnétique, le substrat, et le superstrat ainsi qu'un enroulement conducteur 9 empruntant l'ouverture 8.

La tête représentée sur la figure 1 est destinée à coopérer avec un support d'enregistrement 20 orienté perpendiculairement au substrat, (ou, ce qui revient au même, parallèlement à la tranche de celui-ci).

De telles têtes peuvent être qualifiées de "verticales" en ce sens que la surface active est perpendiculaire à la surface du substrat de départ.

La largeur de l'entrefer, notée ℓ, est comptée perpendiculairement au substrat (ou, ce qui revient au même, parallèlement au support d'enregistrement). Cette largeur ℓ correspond sensiblement à la largeur respective des pistes du support. Sa longueur,notée L, est comptée dans le sens du déplacement relatif de la tête et du support d'enregistrement 20. Quant à la hauteur de l'entrefer, notée h, elle est comptée parallèlement à la face du substrat supportant le circuit magnétique.

On ne confondra pas ce genre de têtes avec les têtes dites "horizontales" où l'entrefer affleure sur une face parallèle au substrat et où le support d'enregistrement se déplace parallèlement à cette face du substrat. Une tête horizontale est décrite par exemple dans le document FR-A-2 604 021.

L'une des différences essentielles entre les têtes verticales de type sandwich et les têtes horizontales (outre des différences évidentes dans leur structure et dans leur procédé de réalisation), tient à ce que, dans ces dernières, la largeur de l'entrefer (correspondant à la largeur de la piste) est définie par lithographie, tandis que la dimension affectée lors de l'usure de la tête est définie par l'épaisseur du matériau magnétique déposé. Dans les têtes verticales de type sandwich comme celle de la figure 1, au contraire, c'est la largeur de l'entrefer ℓ qui est définie par l'épaisseur du matériau magnétique déposé, tandis que l'usure affecte la hauteur h, laquelle est ajustée par lithographie.

La réalisation pratique des têtes verticales de type sandwich telles que celle de la figure 1 implique un grand nombre d'opérations de micromécanique et de soudures à haute température. La réalisation est le plus souvent unitaire, c'est-à-dire non collective.

Certains procédés de réalisation sont notamment décrits dans l'ouvrage intitulé "Recent Magnetics for Electronics", JARECT, vol. 10, chapitre 11, p. 121-133, 1983, édité par Y. SAKURAI, North-Holland, ainsi que dans l'ouvrage intitulé "The Complete Handbook of Magnetic Recording", F. JORGENSEN, chapitre 9, p. 196-216, 1988, édité par TAS BOOKS Inc.

Cependant, il a été proposé également, dans la demande internationale WO-A-9202015, un procédé de réalisation de têtes magnétiques de type "sandwich", qui permet d'obtenir un entrefer vertical très bien contrôlé, dont la largeur est égale à celle de la piste à lire ou à écrire, l'alignement des pièces polaires étant obtenu sans difficulté. Ces têtes magnétiques acceptent l'usure inévitable liée au frottement du support magnétique sur la tête.

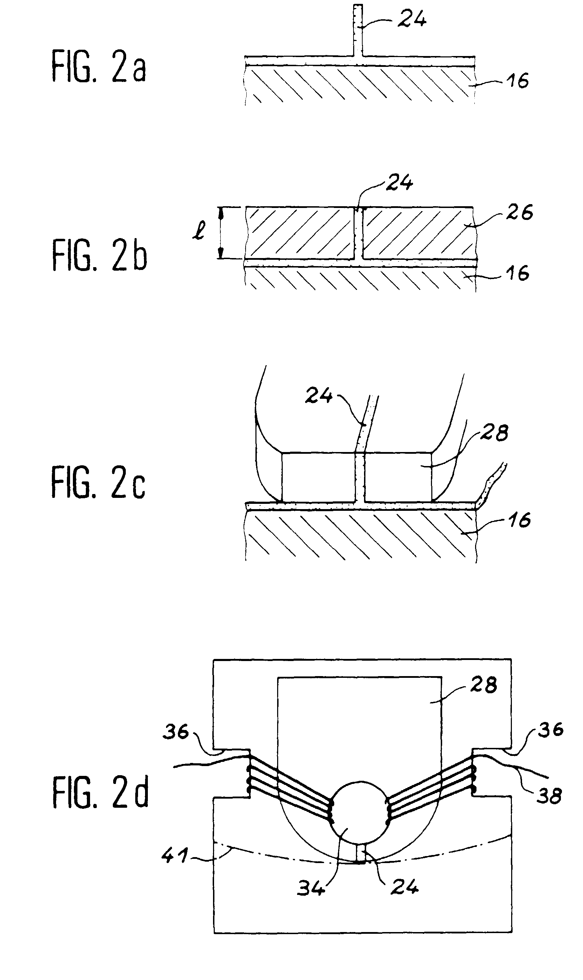

Les figures 2a à 2d annexées rappellent schématiquement en quoi consiste ce procédé connu. On part d'un substrat 16 et, par différentes opérations de gravure dont certaines sont anisotropes, ainsi que par un processus d'oxydation thermique, on réalise une paroi verticale 24 dressée sur le substrat (fig. 2a). Lorsque le substrat est en silicium, cette paroi 24 est en oxyde de silicium, autrement dit en silice.

Une couche magnétique 26 est ensuite déposée de part et d'autre de la paroi 24, et est ensuite planarisée (fig. 2b) . La paroi 24 va jouer le rôle d'espaceur amagnétique. Sa largeur, comptée perpendiculairement au substrat est notée encore ℓ.

Le circuit magnétique 28 est ensuite défini dans sa forme globale par photolithographie (fig. 2c).

L'ensemble est ensuite recouvert par un superstrat (non représenté) et percé d'une ouverture 34 (fig. 2d). Deux encoches 36 sont usinées et un fil conducteur 38 est passé dans l'ouverture 34 et dans les encoches 36, et est enroulé autour du circuit magnétique 28. La surface de frottement 41 est finalement usinée dans l'ensemble. Cette surface est perpendiculaire à la face supérieure du substrat. L'espaceur 24 affleure donc sur la tranche du substrat usiné et se trouve disposé parallèlement au support d'enregistrement (non représenté).

Bien que satisfaisant à certains égards, ce procédé présente un inconvénient dû à la difficulté de réaliser un matériau magnétique satisfaisant. En effet, au-delà des propriétés magnétiques habituelles nécessaires à la réalisation d'un circuit magnétique, il faut pouvoir disposer d'un matériau résistant à l'usure et suffisamment résistif pour éviter les problèmes liés aux courants de Foucault lorsque la tête fonctionne à haute fréquence. Un matériau magnétique satisfaisant à toutes ces conditions ne peut être obtenu que par dépôt en phase vapeur (par exemple par pulvérisation cathodique). Mais les couches ainsi obtenues, qui sont nécessairement minces, présentent des problèmes liés à la différence de coefficient de dilatation entre le substrat et le matériau magnétique, différence qui provoque des décollements des couches.

La présente invention résout ce problème en utilisant non plus un mais deux matériaux magnétiques, mais de natures différentes, dans la zone d'entrefer. Avant de préciser dans quelles conditions ces deux matériaux sont mis en oeuvre, il faut rappeler que l'on connaît déjà des têtes magnétiques à deux matériaux, mais dans la variante horizontale évoquée plus haut et non dans la variante verticale à laquelle s'attache la présente invention.

De telles têtes horizontales à deux matériaux magnétiques sont décrites dans le document FR-A-2 658 646 (ou son correspondant américain US-A-5,224,260). Les figures 3 et 4 annexées illustrent deux variantes de ces têtes.

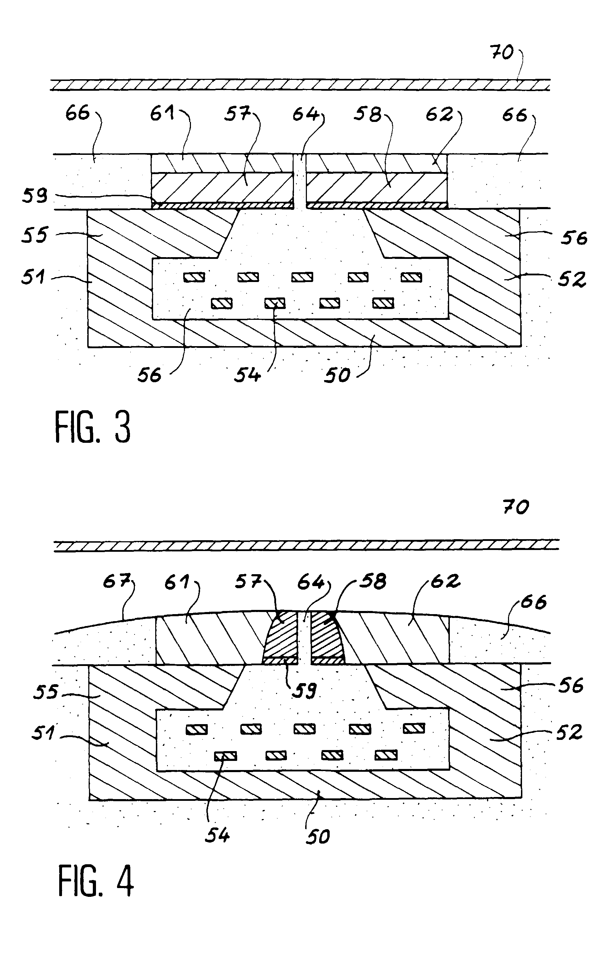

Sur la figure 3, tout d'abord, on voit, en coupe, une tête horizontale comprenant une pièce magnétique inférieure 50, deux piliers magnétiques 51, 52, un bobinage conducteur 54 noyé dans un isolant 56, deux concentrateurs magnétiques 55, 56 et deux pièces polaires supérieures constituées respectivement par un premier matériau magnétique 57, 58 déposé électrolytiquement sur une sous-couche conductrice 59 et par un second matériau magnétique 61, 62 déposé par pulvérisation cathodique. Ces deux pièces polaires sont séparées par un espaceur amagnétique 64. L'ensemble est noyé dans une couche isolante 66. Le support d'enregistrement 70 est parallèle à la surface supérieure de la tête, comme pour toutes les têtes horizontales.

La figure 4 montre une autre variante où l'on retrouve des éléments similaires qui, pour cette raison, portent les mêmes références, mais où les deux matériaux magnétiques sont disposés différemment : le premier matériau 57, 58 déposé électrolytiquement est placé de part et d'autre de l'espaceur 64, tandis que le second 61, 62 est rejeté à l'extérieur du premier.

La figure 4 montre en outre la surface de frottement 67 sur laquelle glisse le support d'enregistrement 70.

Dans la variante de la figure 3, le matériau magnétique 61, 62 qui est destiné à être en contact avec le support d'enregistrement 70, présente une épaisseur voisine de 1 µm et il possède de bonnes caractéristiques magnétiques et mécaniques. Cette variante convient aux systèmes d'enregistrement où l'usure des têtes est faible. Mais elle ne convient pas dans les autres cas, en particulier pour les têtes montées sur tambour tournant, où l'usure des têtes est supérieure à 10 µm.

Dans la variante de la figure 4, le premier matériau magnétique 57, 58, présentant de bonnes propriétés magnétiques est présent sur quelques microns, de part et d'autre de l'espaceur 64 tandis que le second matériau 61, 62, présentant de meilleures propriétés mécaniques tout en assurant de bonnes propriétés magnétiques, occupe la plus grande part de la surface de frottement. Pour pouvoir se permettre une usure supérieure à 10 µm l'épaisseur du second matériau doit donc être supérieure à 10 µm. Or, il est très difficile de déposer par pulvérisation un matériau sur une telle épaisseur.

Le problème de l'usure des têtes en particulier sur les bandes magnétiques n'est donc pas complétement résolu dans l'état antérieur, soit que la couche du matériau aux bonnes propriétés mécaniques et magnétiques (et qui est en contact avec le support d'enregistrement) est trop mince (variante de la figure 3) soit qu'elle est trop épaisse et par conséquent difficile à réaliser (variante de la figure 4).

Il semble même que ce problème soit insoluble puisque les exigences posées sont contradictoires : la couche magnétique devrait être à la fois mince pour pouvoir être déposée par pulvérisation, et épaisse pour résister à l'usure.

Une solution est toutefois proposée par JP-A-1133210 qui décrit une tête magnétique verticale de type sandwich obtenue par dépôt électrolytique sur un substrat d'une première couche en matériau magnétique, par dépôt par pulvérisation d'une seconde couche en matériau magnétique sur la première couche, et par collage de ce substrat avec un autre substrat ayant aussi de telles première et seconde couches magnétiques afin d'obtenir une structure sandwich.

La présente invention a justement pour but de résoudre ce dilemme.

### Exposé de l'invention

A cette fin, l'invention propose de transposer et d'adapter la technique des deux matériaux magnétiques aux têtes verticales de type sandwich (et non plus horizontales) ce qui permet de résoudre le problème technique posé.

Selon l'invention, on dépose le matériau magnétique ayant de bonnes qualités (propriétés magnétiques, résistance à l'usure, résistivité) de part et d'autre de l'espaceur et cela en couche mince et, par conséquent, de manière compatible avec les procédés de dépôt en phase vapeur, notamment par pulvérisation cathodique. La minceur est comptée dans le sens de la largeur de l'entrefer selon les conventions données à propos de la figure 1. Comme la tête est à structure verticale, la minceur de la couche ainsi déposée n'est plus un handicap relativement à l'usure, puisque celle-ci va se manifester par une érosion dans le sens perpendiculaire à la tranche de la tête, donc dans la direction appelée la hauteur de l'entrefer sur la figure 1. On pourra donc donner à cette hauteur la valeur souhaitée, sans pour cela renoncer à la minceur de la couche. On a donc bien résolu le problème posé en disposant d'une couche à la fois mince et haute.

Il reste que, pour augmenter l'épaisseur du circuit magnétique et diminuer sa réluctance, on déposera un autre matériau magnétique, pouvant présenter une qualité mécanique et éventuellement magnétique inférieure à celle du premier. Ce second matériau magnétique pourra être déposé par croissance électrolytique ou par tout autre moyen.

De façon plus précise, la présente invention a donc pour objet une tête magnétique verticale telle que définie à la revendication 1.

De préférence, le premier matériau magnétique est pris dans le groupe constitué par les composés à base de fer et/ou de silicium et/ou d'aluminium, les matériaux amorphes comprenant du cobalt et/ou du niobium et/ou du zirconium, le nitrure de fer ou l'un de ses dérivés.

De préférence, le second matériau magnétique est un alliage à base de fer et/ou de nickel et/ou de cobalt et par exemple du CoFeCu, CoNiFe, ...

La présente invention a également pour objet un procédé de réalisation de la tête qui vient d'être définie, le procédé étant défini à la revendication 7.

De préférence, le second matériau magnétique est déposé par croissance électrolytique, soit en prenant le premier matériau comme électrode, soit en déposant une couche conductrice supplémentaire.

### Brève description des dessins

- la figure 1, déjà décrite, montre une tête magnétique verticale selon l'art antérieur,
- les figures 2a, 2b, 2c et 2d, déjà décrites, montrent quatre stades d'un procédé connu de réalisation d'une tête magnétique verticale,
- la figure 3, déjà décrite, illustre un premier mode de réalisation connu d'une tête horizontale à deux matériaux conducteurs,
- la figure 4, déjà décrite, illustre un second mode de réalisation connu d'une tête horizontale à deux matériaux conducteurs,
- les figures 5a à 5g illustrent diverses étapes d'un mode de mise en oeuvre d'un procédé de réalisation d'une tête magnétique verticale conforme à l'invention,
- les figures 6a à 6c illustrent une variante utilisant une sous-couche conductrice,
- les figures 7a à 7c illustrent une autre variante à couche isolante et à sous-couche conductrice,
- les figures 8a à 8d illustrent diverses étapes d'un autre mode de mise en oeuvre du procédé de l'invention,
- la figure 9 montre une variante à couche isolante et à sous-couche conductrice,
- les figures 10a et 10b montrent une variante à couche supérieure servant de masque,
- les figures 11a à 11d illustrent quatre étapes d'un autre mode de mise en oeuvre du procédé de l'invention,
- la figure 12 montre une autre variante à couche isolante et à sous-couche conductrice.

### Description de modes particuliers de réalisation

Pour plus de simplicité, la description qui suit est donnée pour une tête représentant un entrefer perpendiculaire au substrat ; bien entendu, l'invention s'applique également à des têtes dont l'entrefer présente un angle avec le substrat différent de 90°. La réalisation d'un entrefer de ce dernier type est notamment décrite dans la demande de brevet WO-A9202015.

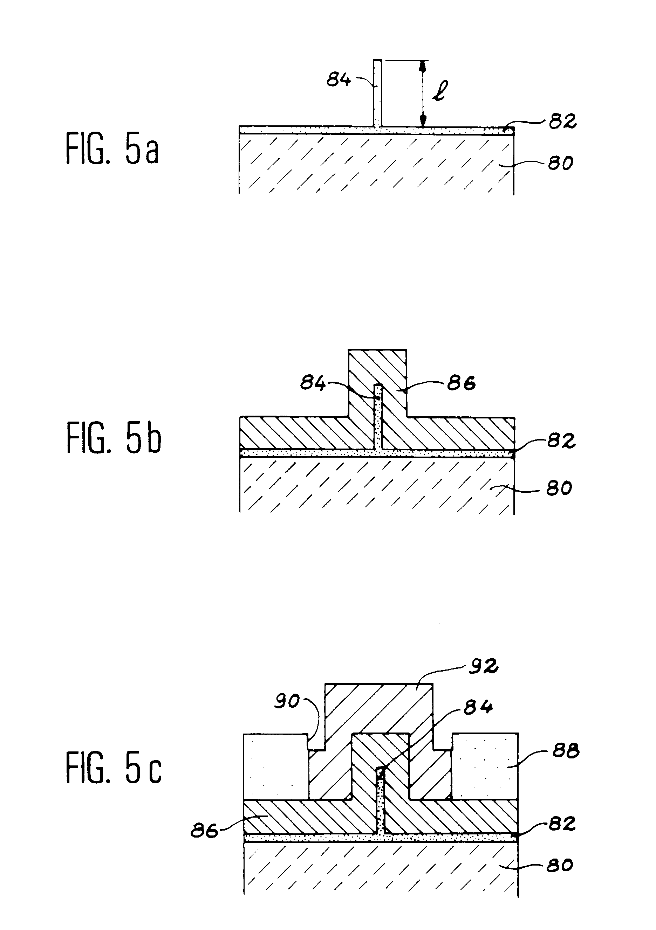

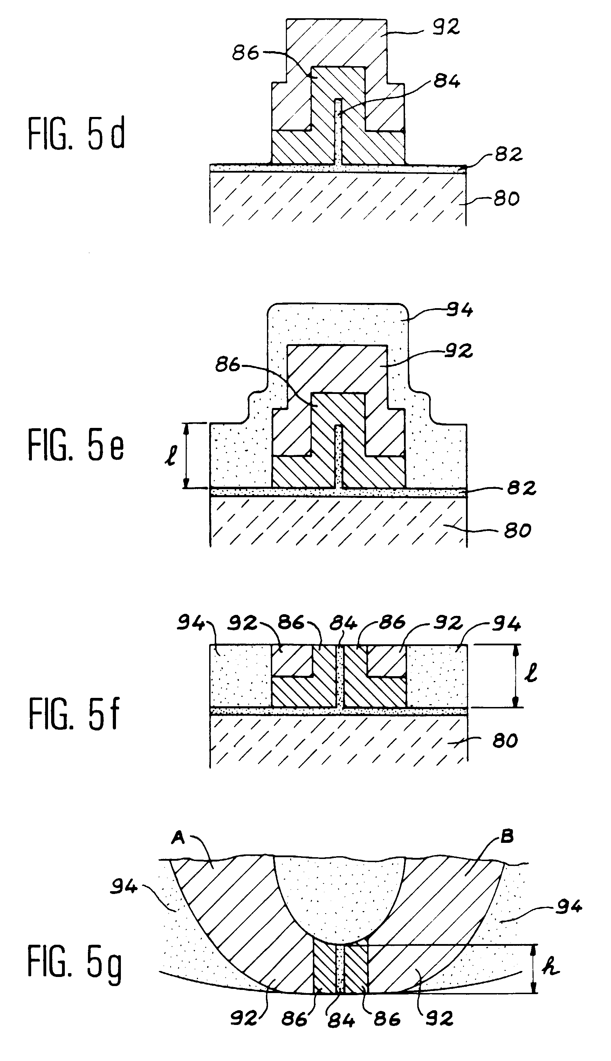

Un premier mode de mise en oeuvre du procédé de l'invention est illustré sur les figures 5a à 5g. Les figures 5a à 5f sont des coupes perpendiculaires au substrat. La figure 5g est une vue de dessus.

On part d'un substrat 80, par exemple en silicium monocristallin d'orientation cristallographique <110>. Par diverses opérations de gravures et d'oxydation thermique qui sont décrites dans le document WO-A9202015 déjà cité, on obtient une surface 82 d'oxyde de silicium et une paroi verticale 84 également en oxyde de silicium (Fig. 5a). La hauteur de cette paroi au-dessus du substrat correspond à ce qui a été appelé la "largeur" ℓ de l'entrefer sur la figure 1.

On dépose ensuite par phase vapeur et notamment par pulvérisation cathodique, un premier matériau magnétique 86 (Fig. 5b). Il peut s'agir, par exemple, d'un alliage dit "Sendust" (marque déposée) comprenant 85% de fer, 5,4% d'aluminium et 9,6% de silicium en masse. L'épaisseur de la couche 86 déposée est inférieure ou égale à la largeur de l'entrefer donc à la largeur de la piste, (c'est-à-dire à la hauteur de la paroi 84) pour éviter les problèmes de décollement. Par exemple, pour une largeur de piste d'enregistrement de 5 µm, on formera une paroi 84 de 5 µm de hauteur mais une couche 86 d'épaisseur égale seulement à 3 µm.

Le procédé se poursuit en déposant un masque 88 par exemple en résine (Fig. 5c) dans lequel on ménage une ouverture 90 qui, dans la région de la paroi 84 est située au-dessus de celle-ci. Prenant le premier matériau magnétique 86 comme électrode conductrice, on fait croître électrolytiquement un second matériau magnétique 92, par exemple en fer-nickel. La hauteur déposée est telle que l'épaisseur totale des deux matériaux magnétiques 86 et 92, de part et d'autre de la paroi 84 soit supérieure à la hauteur de celle-ci.

Ayant enlevé le masque de résine 88, on grave le premier matériau conducteur 86 en prenant le second 92 comme masque (Fig. 5d) . On peut opérer par usinage ionique.

On dépose ensuite sur l'ensemble une couche isolante et amagnétique 94, par exemple en oxyde de silicium (Fig. 5e). On peut opérer par dépôt chimique en phase vapeur assisté par plasma. L'épaisseur de cette couche 94 est légèrement supérieure ou égale à la largeur ℓ de la piste d'enregistrement.

On planarise l'ensemble (Fig. 5f) en s'arrêtant sur le plan général de la couche isolante 94. La paroi 84 est devenue un espaceur amagnétique recouvert, sur ses faces latérales, par le premier matériau magnétique 86, en l'occurrence du Sendust, lequel est en contact avec le second matériau magnétique 92, par exemple du fer-nickel.

La figure 5g est une vue de dessus où l'on voit l'espaceur amagnétique 84 dans sa hauteur h qui détermine l'usure possible et de part et d'autre de l'espaceur, deux branches A et B du circuit dont la forme a été définie par le masque 88. Le reste du circuit qui n'est pas représenté, peut être obtenu soit à partir des mêmes couches 86 et 92, soit à partir de dépôts supplémentaires de couches magnétiques. On termine la réalisation, de façon classique, en disposant sur l'ensemble un superstrat amagnétique, en usinant une surface de frottement 96, en formant un bobinage conducteur avant ou après les étapes précédentes, toutes opérations connues et décrites dans le document WO-A-9202015.

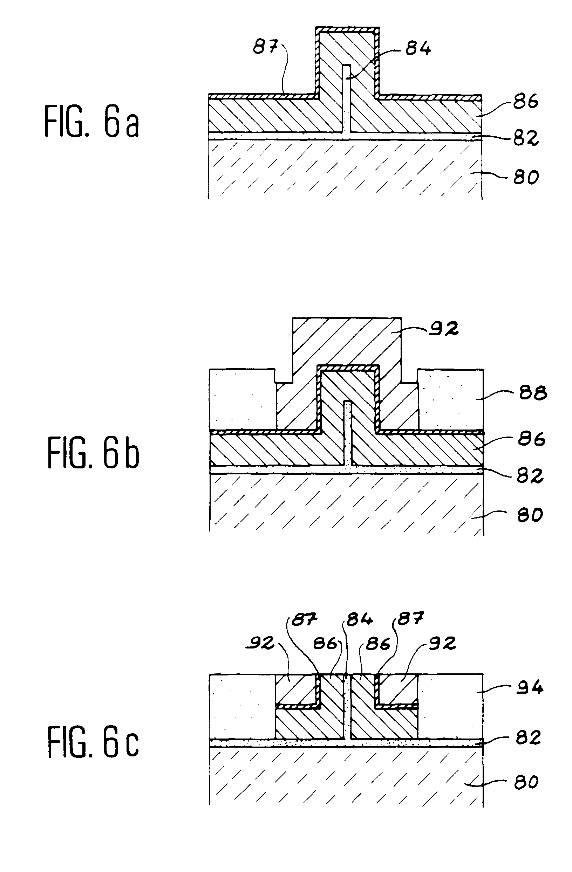

Les figures 6a à 6c illustrent une autre variante du procédé de l'invention. Partant du sous-ensemble déjà illustré sur la figure 5b, on dépose une sous-couche électriquement conductrice 87 sur le premier matériau magnétique 86 (Fig. 6a). Il peut s'agir d'une couche de fer-nickel d'épaisseur 0,1 µm déposée par pulvérisation cathodique.

On définit ensuite, comme dans la variante précédente et par lithographie, la forme du circuit magnétique total ou partiel et l'on procède ensuite au dépôt du second matériau magnétique. Pour cela, on dépose toujours un masque 88 (Fig. 6b) et l'on fait croître encore ce second matériau électrolytiquement mais, cette fois, en prenant la couche 87 comme électrode. On obtient la couche 92.

Les opérations sont ensuite les mêmes que pour les figures 5d à 5f. Le résultat final est illustré sur la figure 6c qui ne diffère de la figure 5f que par l'existence de la sous-couche 87 séparant les deux matériaux magnétiques 86 et 92.

Cette variante présente un intérêt notamment lorsque le premier matériau magnétique ne peut servir de sous-couche d'électrolyse. Par ailleurs, l'utilisation d'une couche supplémentaire 87 peut améliorer l'adhérence de la couche magnétique 92.

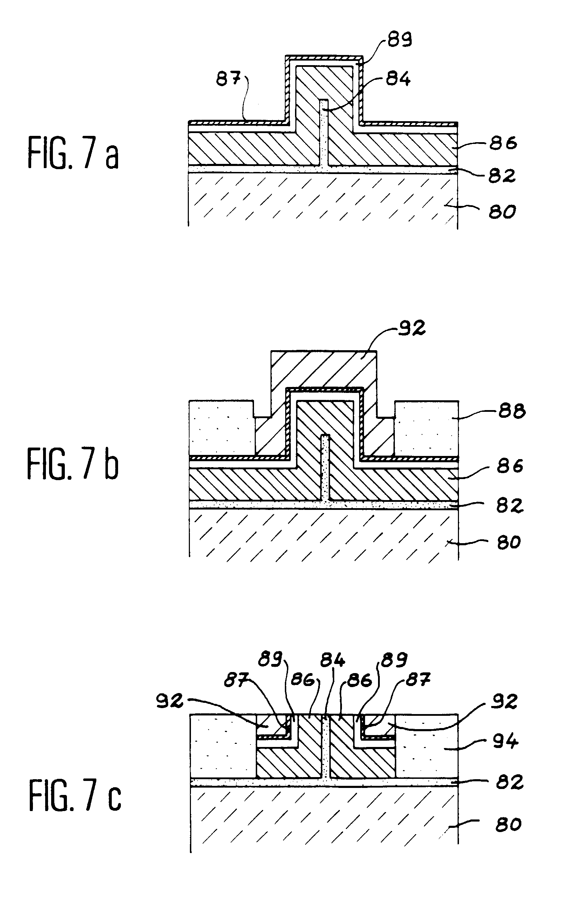

Les figures 7a à 7c illustrent encore une autre variante où l'on dépose, sur le premier matériau magnétique 86, une couche isolante et amagnétique 89 (Fig. 7a), par exemple en oxyde de silicium, par dépôt chimique en phase vapeur assisté par plasma. Cette couche 89 peut avoir une épaisseur d'environ 0,1 µm. On dépose ensuite une sous-couche électriquement conductrice 87 sur la couche isolante 89.

Les étapes suivantes sont inchangées, on voit notamment : croissance électrolytique du second matériau magnétique 92 en prenant la sous-couche 87 comme électrode (Fig. 7b), dépôt d'une couche d'isolant 94, planarisation (Fig. 7c).

La tête obtenue ne diffère de celle de la figure 6c que par la présence de la couche isolante amagnétique 89 séparant les deux matériaux magnétiques.

L'utilisation de cette couche 89 permet de diminuer les courants de Foucault engendrés dans les couches magnétiques et donc notamment d'utiliser ce type de tête à des fréquences élevées.

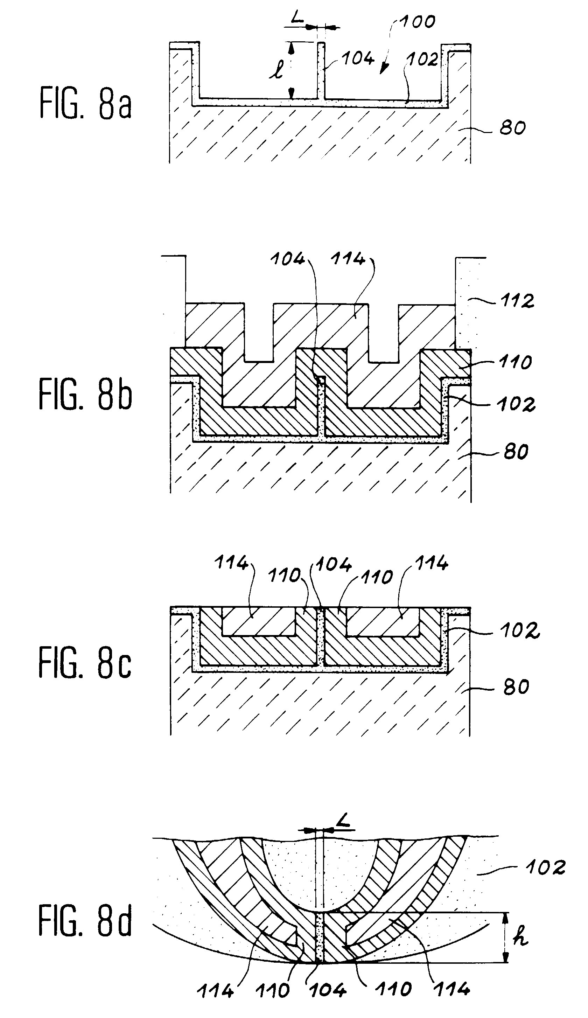

Les figures 8a à 8d illustrent encore un autre mode de mise en oeuvre du procédé de l'invention.

On part toujours d'un substrat 80, par exemple en silicium monocristallin d'orientation cristallographique <110>. Dans ce substrat, on grave un caisson 100 et on réalise, par diverses opérations connues comprenant des gravures et une oxydation thermique, une couche d'oxyde de silicium 102 et une paroi verticale 104 séparant le caisson en deux parties. La hauteur de la paroi 104 est légèrement supérieure ou égale à la largeur ℓ du futur entrefer. Son épaisseur L correspond à la longueur du futur entrefer.

Par des opérations similaires à celles qui ont été décrites à propos des figures 5b et 5f, on dépose par phase vapeur et plus particulièrement par pulvérisation cathodique, un premier matériau magnétique 110, par exemple du Sendust (marque déposée) formée d'un alliage de fer à 85%, d'aluminium à 5,4% de silicium à 9,6% en masse. L'épaisseur de la couche 110 est inférieure ou égale à la hauteur de la paroi 104, autrement dit à la largeur du futur entrefer. L'épaisseur de cette couche est faible, pour éviter les problèmes de décollement. Par exemple, pour une largeur de piste de 5 µm, on pourra déposer une couche de 3 µm de Sendust, on dépose ensuite un masque 112, et, dans une ouverture ménagée au-dessus du caisson et dans les espaces appropriés, on fait croître électrolytiquement un second matériau magnétique 114, par exemple du fer-nickel (Fig. 8b). L'épaisseur totale devra excéder la profondeur du caisson, autrement dit la hauteur de la paroi 104.

On élimine ensuite le masque 112, puis on grave le premier matériau magnétique 110 en prenant le second (114) comme masque et en opérant par gravure ionique, conformément aux opérations illustrées figure 5d.

Après planarisation, on obtient l'ensemble représenté en coupe sur la figure 8c et en vue de dessus sur la figure 8d.

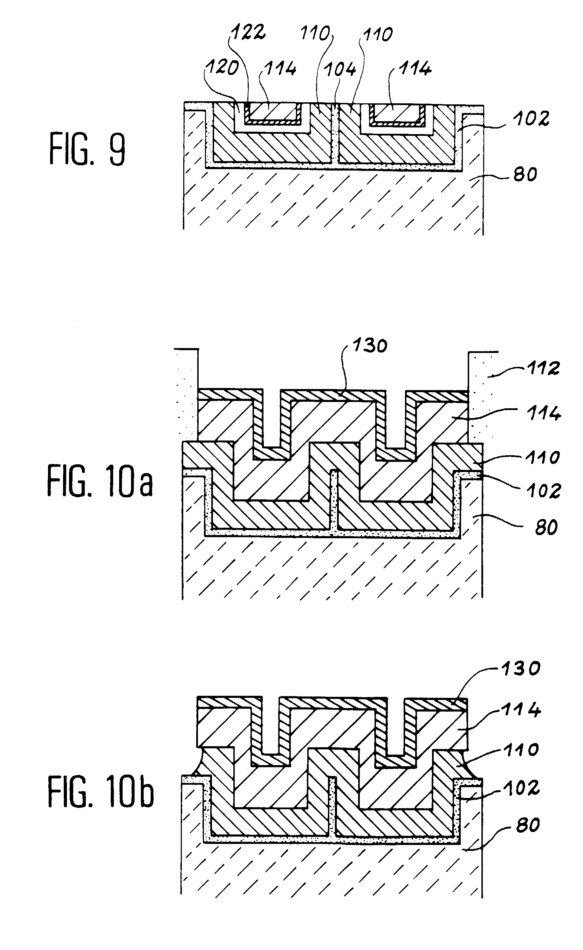

La figure 9 illustre une variante où, comme à propos des figures 6a à 6c, d'une part, et 7a à 7c, d'autre part, on utilise éventuellement une couche isolante et amagnétique 120 (par exemple en oxyde de silicium obtenue par dépôt chimique en phase vapeur par plasma, avec une épaisseur de 0,1 µm) et une couche électriquement conductrice 122 déposée par exemple par pulvérisation cathodique, par exemple en fer-nickel d'épaisseur 0,1 µm, cette dernière couche servant d'électrode dans l'étape de croissance électrolytique du second matériau magnétique 114.

Encore une autre variante du procédé de l'invention est illustrée sur les figures 10a et 10b. Après avoir fait croître électrolytiquement le second matériau magnétique 114 soit directement sur le matériau 110, soit sur la couche 122 associée éventuellement à 120 (Fig. 8b), on dépose dans l'ouverture pratiquée dans le masque 112 un matériau capable de servir de masque dans une opération de gravure chimique. Ce matériau peut être, par exemple, de l'or déposé électrolytiquement. Cette couche, référencée 130, peut avoir une épaisseur de 2 µm (Fig. 10a).

Après enlèvement du masque 112, on grave le premier matériau magnétique 110 par voie chimique (cette gravure chimique présente une bonne sélectivité par rapport à l'oxyde de silicium 102 qui a été déposé à l'origine). On peut utiliser par exemple un mélange H₂SO₄ (40 ml) + HNO₃ (40 ml) + CH₃COOH (20 ml) + HF (10 ml) + H₂O (80 ml) pour graver le Sendust (marque déposée). On obtient alors le sous-ensemble illustré sur la figure 10b.

On planarisera ce sous-ensemble comme décrit précédemment pour s'arrêter sur le plan général de l'oxyde thermique 102 (voir figure 8c).

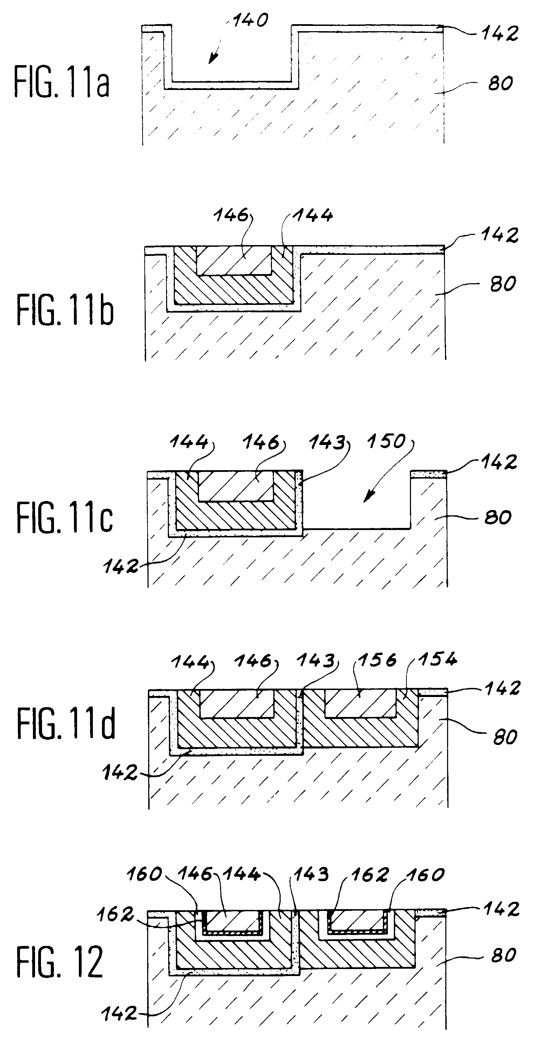

Les figures 11a à 11d illustrent encore un autre mode de mise en oeuvre du procédé de l'invention. Dans une première étape illustrée par la figure 11a, on grave un premier caisson 140 dans le substrat 80 et l'on procède à une oxydation thermique pour constituer une couche d'oxyde de silicium 142. Par des opérations déjà décrites (dépôt en phase vapeur, croissance électrolytique, gravure, planarisation), on dépose les deux matériaux magnétiques 144 et 146 (Fig. 11b) (à comparer avec la figure 8c).

Puis on grave un second caisson 150, en laissant la paroi d'oxyde 143 en place (Fig. 11c). A nouveau, par les mêmes opérations, on dépose les deux matériaux magnétiques 154, 156 dans ce second caisson (Fig. 11d).

Dans la tête ainsi obtenue, la paroi 143 sépare les deux pièces polaires 144-146, d'une part, et 154-156 d'autre part. En outre, la couche d'oxyde 142 isole complétement dans le premier caisson le matériau 144 du substrat 80 alors que dans la figure 8c, on a représenté une isolation complète des matériaux magnétiques avec le substrat (bien que l'isolation du deuxième caisson soit une étape supplémentaire facultative).

Enfin, la figure 12 illustre une variante analogue mais dans laquelle on a déposé, dans le premier et le second caisson, éventuellement une couche isolante amagnétique 160 et une sous-couche électriquement conductrice 112 servant à la croissance électrolytique du second matériau magnétique.

Le procédé de réalisation de l'invention se prête tout à fait bien à un mode de réalisation collectif de têtes tel que celui décrit par exemple dans la demande de brevet WO-A-9202015.

## Revendications

1. Tête magnétique verticale de type sandwich comprenant un substrat (80) avec une face et une tranche, un circuit magnétique disposé sur la face du substrat, et un enroulement conducteur, ce circuit présentant une zone d'entrefer avec deux pièces polaires séparées par un espaceur amagnétique (84, 104, 143), cet espaceur affleurant sur la tranche du substrat (80), cette tête étant destinée à coopérer avec un support d'enregistrement défilant devant la zone d'entrefer, et orienté parallèlement à la tranche du substrat au niveau de l'entrefer, cette tête étant caractérisée par le fait que le circuit magnétique comprend, dans la zone d'entrefer, une couche mince d'un premier matériau magnétique (86, 110, 144, 154), cette couche étant déposée en phase vapeur et encadrant l'espaceur (84, 104, 143) sur toute la largeur (ℓ) de l'espaceur comptée perpendiculairement à la face du substrat (80) et sur l'ensemble de la surface délimitant sur le substrat les pièces polaires de la zone d'entrefer et le circuit magnétique comprenant également un second matériau magnétique (92, 114, 146, 156) présentant des propriétés mécaniques de résistance à l'usure inférieures à celles du premier.

2. Tête magnétique verticale selon la revendication 1, caractérisée par le fait qu'elle comprend en outre une couche de matériau électriquement isolant et amagnétique (89, 120, 160) entre le premier matériau magnétique (86, 110, 144, 154) et le second (92, 114, 146, 156).

3. Tête magnétique verticale selon la revendication 1, caractérisée par le fait qu'elle comprend une sous-couche électriquement conductrice (87, 122, 162) sous le second matériau magnétique (92, 114, 146, 156).

4. Tête magnétique verticale selon la revendication 1, caractérisée par le fait que le premier matériau magnétique (86, 110, 144, 154) est pris dans le groupe constitué par les composés à base de fer et/ou de silicium et/ou d'aluminium, les matériaux amorphes comprenant le cobalt et/ou le niobium et/ou le zirconium, le nitrure de fer ou l'un de ses dérivés.

5. Tête magnétique verticale selon la revendication 1, caractérisée par le fait que le second matériau magnétique (92, 114, 146, 156) est un alliage à base de fer et/ou de nickel et/ou de cobalt.

6. Tête magnétique verticale selon l'une quelconque des revendications 1 à 5, caractérisée par le fait que le substrat (80) est en silicium et l'espaceur (84, 104, 143) en oxyde de silicium.

7. Procédé de réalisation d'une tête magnétique verticale conforme à la revendication 1, consistant à :
- réaliser sur un substrat (80), un espaceur amagnétique (84, 104, 143) disposé sur le substrat,
- déposer de part et d'autre de cet espaceur (84) au moins un matériau magnétique pour constituer une zone d'entrefer,
- compléter le circuit magnétique autour de la zone d'entrefer et lui associer un bobinage conducteur,
ce procédé étant caractérisé par le fait que, pour constituer la zone d'entrefer, il comprend les opérations suivantes :
- déposer en phase vapeur une couche mince d'un premier matériau magnétique (86, 110, 144, 154) de part et d'autre de l'espaceur (84, 104, 143) sur toute sa largeur (ℓ) comptée perpendiculairement au substrat (80),
- déposer un second matériau magnétique épais (92, 114, 146, 156) présentant des propriétés mécaniques inférieures à celles du premier.

8. Procédé selon la revendication 7, caractérisé par le fait qu'il comprend les opérations suivantes :
- sur le substrat (80) sur lequel on a formé une paroi amagnétique (84), on dépose en phase vapeur une couche du premier matériau magnétique (86), celui-ci surmontant la paroi (84) et s'étendant en partie sur le substrat (80), de part et d'autre de la paroi (84), sur une épaisseur inférieure à la hauteur de la paroi (84),
- on dépose un premier masque (88), dans lequel on ménage une ouverture (90) située au-dessus de la paroi (84),
- on dépose le second matériau magnétique (92) sur le premier matériau (86) dans l'ouverture (90) ménagée dans le premier masque (88), ce second matériau magnétique (92) recouvrant le premier (86) dans l'ouverture,
- on enlève le premier masque (88),
- on grave la couche du premier matériau magnétique (86) en utilisant la couche du second matériau magnétique (92) comme masque,
- on dépose sur le sous-ensemble ainsi gravé une couche isolante (94) avec une épaisseur légèrement supérieure ou égale à la largeur de l'entrefer désiré,
- on planarise l'ensemble jusqu'au niveau de la couche isolante (94) ce qui dégage la paroi (84).

9. Procédé selon la revendication 7, caractérisé par le fait que :
- on grave dans le substrat (80) un caisson (100) d'une profondeur légèrement supérieure ou égale à la largeur de l'entrefer désiré,
- on forme dans ce caisson (100) une couche isolante (102) et une paroi amagnétique (104), la paroi (104) séparant le caisson en deux parties,
- on dépose en phase vapeur, sur l'ensemble, une couche mince (110) du premier matériau magnétique, ce premier matériau magnétique remplissant le caisson sur une hauteur inférieure à la hauteur de la paroi et s'étendant de part et d'autre du caisson sur le substrat (80),
- on dépose un troisième masque (112) sur l'ensemble,
- on définit dans ce troisième masque (112) une ouverture située au-dessus de la paroi (104) et plus large que le caisson (100),
- on dépose le second matériau magnétique (114) dans cette ouverture et sur le premier matériau magnétique (110),
- on enlève le troisième masque (112),
- on planarise l'ensemble jusqu'à laisser affleurer la paroi (104) sur la couche isolante (102) recouvrant le substrat (80).

10. Procédé selon la revendication 9, caractérisé par le fait qu'après avoir enlevé le troisième masque (112) et avant la planarisation on grave la couche du premier matériau magnétique (110) en utilisant le second matériau magnétique (114) comme quatrième masque.

11. Procédé selon la revendication 9, caractérisé par le fait que :
- avant d'enlever le troisième masque (112), on dépose sur le second matériau magnétique (114) une couche(130) de matériau capable de servir de masque dans une gravure chimique,
- on enlève le troisième masque (112),
- on grave le premier matériau magnétique (110) en utilisant la couche (130) comme masque
- on planarise l'ensemble.

12. Procédé selon la revendication 7, caractérisé par le fait qu'il comprend les opérations suivantes :
A) dans une première phase :
- on réalise un premier caisson (140) dans le substrat (80), ce premier caisson (140) ayant une certaine profondeur légérement supérieure ou égale à la largeur de l'entrefer désiré,
- on forme une couche isolante (142) sur le fond et sur les parois latérales de ce premier caisson et sur le substrat (80),
- on dépose en phase vapeur une couche du premier matériau magnétique (144) dans ce premier caisson, cette couche ayant une épaisseur inférieure à la profondeur du premier caisson,
- on dépose le second matériau magnétique (146) sur le premier matériau magnétique (144),
- on planarise l'ensemble pour le mettre à niveau avec la couche isolante (142) du substrat (80),
B) dans une seconde phase :
- on grave un deuxième caisson (150) à côté du premier (140), le second caisson (150) ayant une profondeur légèrement supérieure ou égale à la largeur de l'entrefer désiré et étant séparé du premier caisson par une des parois latérales (143) du premier caisson recouverte de la couche isolante (142),
- on dépose en phase vapeur une couche mince (154) du premier matériau magnétique dans ce deuxième caisson (150), cette couche ayant une épaisseur inférieure à la profondeur du second caisson (150),
- on dépose le second matériau magnétique sur la couche (154) du premier matériau,
- on planarise l'ensemble pour le mettre à niveau avec la couche isolante (142) du substrat (80).

13. Procédé selon l'une quelconque des revendications 7 à 12, caractérisé par le fait que le second matériau magnétique (92, 114, 146, 156) est obtenu par croissance électrolytique.

14. Procédé selon la revendication 13, caractérisé par le fait que, pour faire croître électrolytiquement le second matériau magnétique (92, 114, 146, 156), on utilise le premier matériau magnétique (86, 110, 144, 154) comme électrode.

15. Procédé selon la revendication 13, caractérisé par le fait que, pour faire croître électrolytiquement le second matériau magnétique (92, 114, 146, 156), on dépose une couche électriquement conductrice (87, 122, 162) et on utilise cette couche conductrice comme électrode.

16. Procédé selon la revendication 13, caractérisé par le fait que :
- on dépose sur le premier matériau magnétique (86, 110, 114, 154) une couche d'un matériau isolant et amagnétique (89, 120, 160),
- on dépose sur cette couche isolante et amagnétique (89, 120, 160) une couche électriquement conductrice (87, 122, 162),
- on utilise cette couche conductrice (87, 122, 162) comme électrode pour faire croître électrolytiquement le second matériau magnétique (92, 114, 146, 156).

17. Procédé selon l'une quelconque des revendications 7 à 16, caractérisé par le fait que l'opération de dépôt en phase vapeur de la couche mince du premier matériau magnétique (86, 110, 114, 154) est une pulvérisation cathodique.

## Patentansprüche

1. Vertikaler Magnetkopf des Sandwich-Typs mit einem Substrat mit einer Fläche und einer Schnittfläche, einem auf der Fläche des Substrats angeordneten Magnetkreis und einer leitenden Wicklung bzw. Spule, wobei dieser Kreis eine Spalt-Zone mit zwei Polschuhen aufweist, die durch einen unmagnetischen Abstandshalter (84, 104, 143) getrennt sind, dieser Abstandshalter mit der Schnittfläche des Substrats (80) auf gleicher Höhe ist und dieser Kopf dazu bestimmt ist, mit einem Aufzeichnungsträger zusammenzuwirken, der vor der Spalt-Zone vorbeiläuft und in Höhe des Spalts parallel zu der Schnittfläche des Substrats ausgerichtet ist, wobei dieser Kopf
**dadurch gekennzeichnet** ist, dass der Magnetkreis in der Spalt-Zone eine dünne Schicht aus einem ersten magnetischen Material (86, 110, 144, 154) umfasst, wobei diese Schicht in der Gasphase abgeschieden wird und den Abstandshalter (84, 104, 143) über die gesamte Breite (ℓ) des Abstandshalters, senkrecht zu der Fläche des Substrats (80), und auf der gesamten Fläche umgibt, die auf dem Substrat die Polschuhe von der Spalt-Zone abgrenzt, wobei der Magnetkreis auch ein zweites magnetisches Material (92, 114, 146, 156) umfasst, dessen mechanische Verschleißfestigkeitswerte niedriger sind als die des ersten.

2. Vertikaler Magnetkopf nach Anspruch 1, dadurch gekennzeichnet, dass er zwischen dem ersten magnetischen Material (86, 110, 144, 154) und dem zweiten (92, 114, 146, 156) außerdem eine Schicht aus einem elektrisch isolierenden und unmagnetischen Material (89, 120, 160) umfasst.

3. Vertikaler Magnetkopf nach Anspruch 1, dadurch gekennzeichnet, dass er unter dem zweiten magnetischen Material (92, 114, 146, 156) eine elektrisch leitende Unterschicht (87, 122, 162) umfasst.

4. Vertikaler Magnetkopf nach Anspruch 1, dadurch gekennzeichnet, dass das erste magnetische Material (86, 110, 144, 154) aus der Gruppe genommen wird, die durch die Verbindungen auf Eisen- und/oder Silizium- und/oder Aluminiumbasis, die Kobalt und/oder Niobium und/oder Zirkonium enthaltenden amorphen Materialien, das Eisennitrid oder eines seiner Derivate gebildet wird.

5. Vertikaler Magnetkopf nach Anspruch 1, dadurch gekennzeichnet, dass das zweite magnetische Material (92, 114, 146, 156) eine Legierung auf Eisen- und/oder Nickelund/oder Kobaltbasis ist.

6. Vertikaler Magnetkopf nach einem der Ansprüche 1 bis 5, dadurch gekennzeichnet, dass das Substrat (80) aus Silizium ist und der Abstandshalter (82, 104, 143) aus Siliziumoxid.

7. Verfahren zur Herstellung eines vertikalen Magnetkopfs nach Anspruch 1, darin bestehend:
- auf einem Substrat (80) einen unmagnetischen Abstandshalter (84, 104, 143) zu realisieren,
- beiderseits dieses Abstandshalters (84) wenigstens ein magnetisches Material abzuscheiden, um eine Spalt-Zone zu bilden,
- den Magnetkreis um die Spalt-Zone herum zu vervollständigen und im eine leitende Spule zuzuordnen,
**dadurch gekennzeichnet,** dass es, um die Spalt-Zone zu bilden, die folgenden Operationen umfasst:
- Abscheiden einer dünnen Schicht aus einem ersten magnetischen Material (86, 110, 144, 154) beiderseits des Abstandshalters (84, 104, 143) über seine ganze Breite (*l*), senkrecht zum Substrat (80) gesehen,
- Abscheiden eines zweiten, dicken magnetischen Materials (92, 114, 146, 156) mit niedrigeren mechanischen Werten als die des ersten.

8. Verfahren nach Anspruch 7, dadurch gekennzeichnet, dass es die folgenden Operationen umfasst:
- man scheidet auf dem Substrat (80), auf dem man eine unmagnetische Wand (84) gebildet hat, in der Gasphase eine erste magnetisch Schicht (86) ab, die die Wand (84) überragt bzw. überwölbt und sich mit einer Dicke, die kleiner ist als die Höhe der Wand (84), teilweise über das Substrat (80) erstreckt, beiderseits der Wand (84),
- man scheidet eine erste Maske (88) ab, in der man eine Öffnung (90) ausspart, die sich über der Wand (84) befindet,
- man scheidet das zweite magnetische Material (92) auf dem ersten Material (86) ab, in der in der ersten Maske (88) ausgesparten Öffnung (90), wobei dieses zweite magnetische Material (92) das erste (86) in der Öffnung bedeckt,
- man entfernt die erste Maske (88),
- man ätzt die Schicht des ersten magnetischen Materials (86), indem man die zweite Schicht aus magnetischem Material (92) als Maske benutzt,
- man scheidet auf dem derart geätzten Teilaufbau eine Isolierschicht (94) mit einer Dicke ab, die etwas größer als oder gleich groß wie die Breite des gewünschten Spalts ist,
- man planarisiert das Ganze bis auf das Niveau der Isolierschicht (94), was die Wand (84) freilegt.

9. Verfahren nach Anspruch 7, dadurch gekennzeichnet:
- dass man in das Substrat (80) eine Senke (100) mit einer Tiefe ätzt, die etwas größer als oder gleich groß wie die Breite des gewünschten Spalts ist,
- dass man in dieser Senke (100) eine Isolierschicht (102) und eine unmagnetische Wand (104) bildet, wobei die Wand (104) in zwei Teile trennt,
- dass man in der Gasphase auf dem Ganzen eine dünne Schicht (110) aus dem ersten magnetischen Material abscheidet, wobei dieses erste magnetische Material die Senke bis auf eine Höhe füllt, die kleiner ist als die Höhe der Wand und sich beiderseits der Senke über das Substrat (80) erstreckt,
- dass man auf dem Ganzen eine dritte Maske (112) abscheidet,
- dass man in dieser dritten Maske (112) eine Öffnung definiert, die sich über der Wand (104) befindet und breiter als die Senke (100) ist,
- dass man das zweite magnetische Material (114) in dieser Öffnung und auf dem ersten magnetischen Material (110) abscheidet,
- dass man die dritte Maske (112) entfernt,
- dass man das Ganze planarisiert bis die Wand (104) auf einer Höhe mit der das Substrat (80) bedeckenden Isolierschicht (102) ist.

10. Verfahren nach Anspruch 9, dadurch gekennzeichnet, dass man nach dem Entfernen der dritten Maske (112) und vor dem Planarisieren die Schicht des ersten magnetischen Materials (110) ätzt, indem man das zweite magnetische Material (114) als vierte Maske benutzt.

11. Verfahren nach Anspruch 9, dadurch gekennzeichnet:
- dass man vor dem Entfernen der dritten Maske (112) auf dem zweiten magnetischen Material (114) eine Schicht (130) aus einem Material abscheidet, das sich als Maske für eine chemische Ätzung eignet,
- dass man die dritte Maske (112) entfernt,
- dass man das erste magnetische Material (110) ätzt, indem man die Schicht (130) als Maske benutzt,
- dass man das Ganze planarisiert.

12. Verfahren nach Anspruch 7, dadurch gekennzeichnet, dass es die folgenden Operationen umfasst:
A) in einer ersten Phase:
- realisiert man eine erste Senke (140) in dem Substrat (80), wobei diese erste Senke (140) eine bestimmte Tiefe hat, die etwas größer als oder gleich groß wie die Breite des erwünschten Spalts ist,
- bildet man eine Isolierschicht (142) auf dem Boden und den Seitenwänden dieser ersten Senke und auf dem Substrat (80),
- scheidet man in der Gasphase eine Schicht des ersten magnetischen Materials (144) ab, wobei diese Schicht eine Dicke hat, die kleiner ist als die Tiefe der ersten Senke,
- scheidet man auf dem ersten magnetischen Material (144) das zweite magnetische Material (146) ab,
- planarisiert man das Ganze, um es auf gleiche Höhe mit der Isolierschicht (142) des Substrats (80) zu bringen,
B) in einer zweiten Phase:
- ätzt man eine zweite Senke (150) seitlich der ersten (140), wobei die zweite Senke (150) eine Tiefe hat, die etwas größer als oder gleich groß wie die Breite des erwünschten Spalts ist, und von der ersten Senke durch eine Seitenwand (143) getrennt ist,
- scheidet man in der Gasphase in der zweiten Senke (150) eine dünne Schicht (154) des ersten magnetischen Materials ab, wobei diese Schicht eine Dicke hat, die kleiner ist als die Tiefe der zweiten Senke (150),
- scheidet man das zweite magnetische Material auf der Schicht (154) des ersten Materials ab,
- planarisiert man das Ganze, um es auf gleiche Höhe wie die Isolierschicht (142) des Substrats (80) zu bringen.

13. Verfahren nach einem der Ansprüche 7 bis 12, dadurch gekennzeichnet, dass man das zweite magnetische Material (92, 114, 146, 156) durch elektrolytisches Wachstum erhält.

14. Verfahren nach Anspruch 13, dadurch gekennzeichnet, dass man, um das zweite magnetische Material (92, 114, 146, 156) elektrolytisch aufwachsen zu lassen, das erste magnetische Material (86, 110, 144, 154) als Elektrode benutzt.

15. Verfahren nach Anspruch 13, dadurch gekennzeichnet, dass man, um das zweite magnetische Material (92, 114, 146, 156) elektrolytisch aufwachsen zu lassen, eine elektrisch leitende Schicht (87, 122, 162) abscheidet und man diese leitende Schicht als Elektrode benutzt.

16. Verfahren nach Anspruch 13, dadurch gekennzeichnet:
- dass man auf dem ersten magnetischen Material (86, 110, 114, 154) eine Schicht aus isolierendem und unmagnetischem Material (89, 120, 160) abscheidet,
- dass man auf dieser isolierenden und unmagnetischen Schicht (89, 120, 160) eine elektrisch leitende Schicht (87, 122, 162) abscheidet,
- dass man diese leitende Schicht (87, 122, 162) als Elektrode benutzt, um das zweite magnetische Material (92, 114, 146, 156) elektrolytisch aufwachsen zu lassen.

17. Verfahren nach einem der vorhergehenden Ansprüche 7 bis 16, dadurch gekennzeichnet, dass die Gasphasenabscheidungsoperation der dünnen Schicht des ersten Materials (86, 110, 114, 154) eine Kathodenzerstäubung ist.

## Claims

1. Vertical magnetic head of the sandwich type comprising a substrate (80) with a face and an edge, a magnetic circuit placed on the face of the substrate and a conductor winding, said circuit having a head gap area with two pole pieces separated by an amagnetic spacer (84, 104, 143), said spacer being flush with the edge of the substrate (80), said head being intended to cooperate with a recording support moving in front of the head gap area and oriented parallel to the edge of the substrate at the head gap, said head being characterized in that the magnetic circuit has, in the head gap area, a thin layer of a first magnetic material (86, 110, 144, 154), said layer being vapour phase deposited and surrounding the spacer (84, 104, 143) over the entire width (ℓ) of the spacer counted perpendicular to the face of the substrate (80) and on the complete surface defining on the substrate the pole pieces of the head gap area, and the magnetic circuit also comprising a second magnetic material (92, 114, 146, 156) having inferior wear-resisting mechanical properties to those of the first material.

2. Vertical magnetic head according to claim 1, characterized in that it also has an electrically insulating, amagnetic material layer (89, 120, 160) between the first magnetic material (86, 110, 144, 154) and the second magnetic material (92, 144, 146, 156).

3. Vertical magnetic head according to claim 1, characterized in that it has an electrically conductive underlayer (87, 122, 162) beneath the second magnetic material (92, 114, 146, 156).

4. Vertical magnetic head according to claim 1, characterized in that the first magnetic material (86, 110, 144, 154) is taken from within the group constituted by compounds based on iron and/or silicon and/or aluminium, amorphous materials including cobalt and/or niobium and/or zirconium, iron nitride or one of its derivatives.

5. Vertical magnetic head according to claim 1, characterized in that the second magnetic material (92, 114, 146, 156) is an alloy based on iron and/or nickel and/or cobalt.

6. Vertical magnetic head according to any one of the claims 1 to 5, characterized in that the substrate (80) is of silicon and the spacer (84, 104, 143) of silicon oxide.

7. Process for producing a vertical magnetic head according to claim 1 comprising:
- producing on a substrate (80) an amagnetic spacer (84, 104, 143) placed on the substrate,
- depositing on either side of said spacer (84) at least one magnetic material for forming a head gap area,
- completing the magnetic circuit around the head gap area and associating a conductor winding therewith,
said process being characterized in that, for forming the head gap area, it involves the following operations:
- vapour deposition of a thin layer of a first magnetic material (86, 110, 144, 154) on either side of the spacer (84, 104, 143) over the entire width (ℓ) counted perpendicular to the substrate (80),
- depositing a second, thick magnetic material (92, 114, 146, 156) having inferior mechanical properties to those of the first material.

8. Process according to claim 7, characterized in that it has the following operations:
- on the substrate (80) on which has been formed a magnetic wall (84), vapour deposition takes place of a layer of the first magnetic material (86), which surmounts the wall (84) and partly extends over the substrate (80) on either side of the wall (84) over a thickness less than the height of the wall (84),
- a first mask (88) is deposited, in which is formed an opening (90) located above the wall (84),
- the second magnetic material (92) is deposited on the first material (86) in the opening (90) made in the first mask (88), said second magnetic material (92) covering the first material (86) in the opening,
- the first mask (88) is removed,
- the layer of the first magnetic material (86) is etched using the layer of the second magnetic material (92) as the mask,
- on the thus etched subassembly is deposited an insulating layer (94) with a thickness slightly exceeding or equal to the width of the desired head gap,
- the assembly is planarized to the level of the insulating layer (94), which frees the wall (84).

9. Process according to claim 7, characterized in that:
- etching takes place in the substrate (80) of a recess (100) having a depth slightly exceeding or equal to the width of the desired head gap,
- in said recess (100) is formed an insulating layer (102) and an amagnetic wall (104), which subdivides the recess into two portions,
- vapour deposition takes place on the assembly of a thin layer (110) of the first magnetic material, which fills the recess over a height less than the height of the wall and extending on either side of the recess on the substrate (80),
- a third mask (112) is deposited on the assembly,
- in said third mask (112) is defined an opening positioned above the wall (104) and wider than the recess (100),
- the second magnetic material (114) is deposited in said opening and on the first magnetic material (110),
- the third mask (112) is removed,
- the assembly is planarized until the wall (104) is level with the insulating layer (102) covering the substrate (80).

10. Process according to claim 9, characterized in that after removing the third mask (112) and prior to planarization, etching takes place of the layer of the first magnetic material (110) using the second magnetic material (114) as the fourth mask.

11. Process according to claim 9, characterized in that:
- before removing the third mask (112), deposition takes place on the second magnetic material (114) of a layer (130) of material able to serve as a mask in chemical etching,
- the third mask (12) is removed,
- the first magnetic material (110) is etched using the layer (130) as the mask,
- the assembly is planarized.

12. Process according to claim 7, characterized in that it has the following operations:
A) in a first phase:
- a first recess (140) is formed in the substrate (80), said first recess (140) having a certain depth slightly exceeding or equal to the width of he desired head gap,
- an insulating layer (142) is formed on the bottom and on the side walls of said first recess and on the substrate (80),
- vapour deposition takes place of a layer of the first magnetic material (144) in said first recess, said layer having a thickness smaller than the depth of the first recess,
- the second magnetic material (146) is deposited on the first magnetic material (144),
- the assembly is planarized in order to make it level with the insulating layer (142) on the substrate (180),
B) in a second phase:
- a second recess (150) is etched alongside the first recess (140), the second recess (150) having a depth slightly exceeding or equal to the width of the desired head gap and being separated from the first recess by one of the side walls (143) of the first recess covered with the insulating layer (142),
- vapour deposition takes place of a thin layer (154) of the first magnetic material in said second recess (150), said layer having a thickness smaller than the depth of the second recess (150),
- the second magnetic material is deposited on the layer (154) of the first material,
- the assembly is planarized in order to make it level with the insulating layer (142) of the substrate (80).

13. Process according to any one of the claims 7 to 12, characterized in that the second magnetic material (92, 114, 146, 156) is obtained by electrolytic growth.

14. Process according to claim 13, characterized in that, for electrolytically growing the second magnetic material (92, 114, 146, 156), the first magnetic material (86, 110, 144, 154) is used as the electrode.

15. Process according to claim 13, characterized in that for electrolytically growing the second magnetic material (92, 114, 146, 156), deposition takes place of an electrically conductive layer (87, 122, 162) and the latter is used as the electrode.

16. Process according to claim 13, characterized in that:
- deposition takes place on the first magnetic material (86, 110, 114, 154) of a layer of an insulating, amagnetic material (89, 120, 160),
- deposition takes place on said said insulating, amagnetic layer (89, 120, 160) of an electrically conductive layer (87, 122, 162),
- said conductive layer (87, 122, 162) is used as the electrode for electrolytically growing the second magnetic material (92, 114, 146, 156).

17. Process according to any one of the claims 7 to 16, characterized in that the vapour deposition of the thin layer of the first magnetic material (86, 110, 114, 154) is a cathodic sputtering operation.
